# EUROPÄISCHE PATENTSCHRIFT

(11) **EP 0 505 902 B1**
(45) Veröffentlichungstag und Bekanntmachung des Hinweises auf die Patenterteilung: **11.01.1995**
(21) Anmeldenummer: 92104641.3
(22) Anmeldetag: 18.03.1992
(51) Int. Cl.: H02G 3/04, H02G 9/06

(54) **Abdichtelement für mit Kabeln belegte Kabelzüge in Kabelkanälen**
Seal member for cable assembly in cable channel
Elément d'étanchéité pour assemblage de câbles dans des canalisations de câblage

(30) Priorität: 28.03.1991 DE 4110268
(43) Veröffentlichungstag der Anmeldung: 30.09.1992
(73) Patentinhaber: THYSSEN POLYMER GMBH, 81601 München (DE)
(72) Erfinder: Bauer, Peter, W-8441 Konzell (DE); Jirka, Karl, W-8000 München 83 (DE); Helf, Walter, W-8440 Straubing (DE)

(56) Entgegenhaltungen:
- DE-A- 3 322 162
- DE-A- 3 816 031
- US-A- 1 851 939

## Beschreibung

Die Erfindung bezieht sich auf ein Dichtelement, mit dem belegte Kabelzüge zum umgebenden kabelkanalrohr wasser- un gasdicht fixierbar sind gemäß dem Oberbegriff des Anspruchs 1.

Derartige Bauteile sind an sich bekannt. Diese sind im allgemeinen aber nur einsetzbar, wenn sich in den einzelnen Kabelzügen keine Kabel befinden.

Die DE-PS 40 09 706 zeigt eine Vorrichtung zum Abdichten von Kabeln in rohrförmigen Kabelkanalzügen mit einem Abdichtstopfen, die aus einem Stützelement aus einer geteilten Spreizhülse mit Kabelstützringen, Dichtscheibe und einem Spreizkeil für die Spreizhülse besteht, ferner aus einem gegen den Kanalzug stoßseitig anstehenden Verschlußelement aus einer geteilten Verschlußkappe, Dichtscheibe und Deckel, wobei das Verschlußelement unter Bildung einer Dichtkammer zur Aufnahme von Dichtmasse mittels Schraubenbolzen gegeneinander verspannbar ist. Ein solches Verschlußelement ist, abgesehen davon, daß es nur für die Abdichtung eines Kabels geeignet ist, mit vielen Einzelteilen aufgebaut und deshalb unwirtschaftlich.

Aus der DE 38 16 031 A1 ist ein Dichtelement bekannt, das auch bei bereits mit Kabeln belegten Kabelzügen innerhalb eines Schutzrohres einsetzbar ist. Dabei ist die äußere Platte mehrgeteilt, was bei der Montage unter ungünstigen Bedingungen zu Schwierigkeiten führen kann.

Aus der DE-PS 37 07 432 ist zwar ein Abdichtelement für ein 4-fach Rohr ersichtlich, jedoch beruht auch dieses Abdichtelement auf dem gleichen Prinzip, wie das mit der DE-PS 40 09 706 vorgeschlagene, d.h. zwischen zwei Scheiben wird zum Abdichten ein Gummiteil verpreßt. Außerdem ist das Abdichtelement einteilig ausgebildet, es eignet sich daher nur für eine begrenzte Anzahl der in der Praxis vorkommenden Anwendungsfälle bei denen Kabel von hinten einschiebbar sind. Diese Vorrichtung ist z.B. dann nicht einsetzbar, wenn eine nachträgliche Montage bei mit Kabeln belegten Rohren oder bei "durchgezogenen Rohren", wie in Schächten üblich, vorgenommen wird.

Ähnliches gilt für den Gegenstand der DE-OS 34 43 284.

Ein weiterer, kompressibler, Verschluß für Kabelkanäle geht aus der US-PS 1.851.939 hervor, mit dem ein laterales Einziehen der Kabel in dessen geschlitzte Durchführungen sowie ein einfaches, schnelles Verbinden mit dem Hausanschluß erzielt ist, ohne daß Gase eindringen können.

Der Abdichtstopfen gem. der DE-OS 38 01 620 ist nur geeignet das Rohr selbst abzudichten, es handelt sich dabei um einen Rohrendverschluß, mittels eines an der Innenwandung des Schutzrohres sich dichtend abstützenden scheibenartigen Abdichtteils.

Auch der Gegenstand der DE-OS 38 14 215 betrifft, wie die DE-PS 40 09 706, ein Abdichtelement zum Abdichten von Kabeln, außerdem ist das Element einteilig, also nicht teilbar und besitzt kein Spannelement.

Hier setzt die Erfindung ein.

Die mit der Erfindung vorgeschlagene Lösung der Aufgabe wie sie im Anspruch 1 offenbart ist beseitigt die Schwierigkeiten der bekannten Abdichtelemente und weist die Vorteile auf, daß die Druckscheibe nur noch aus einem Teil besteht, so daß ein nachträglicher Einbau problemlos möglich ist, wobei das Abdichtelement nicht nur bei Rohren mit einem kreisförmigen Innendurchmesser, sondern auch bei sogen. Halbrohren mit anders gestalteten Innenoberflächen einsetzbar ist.

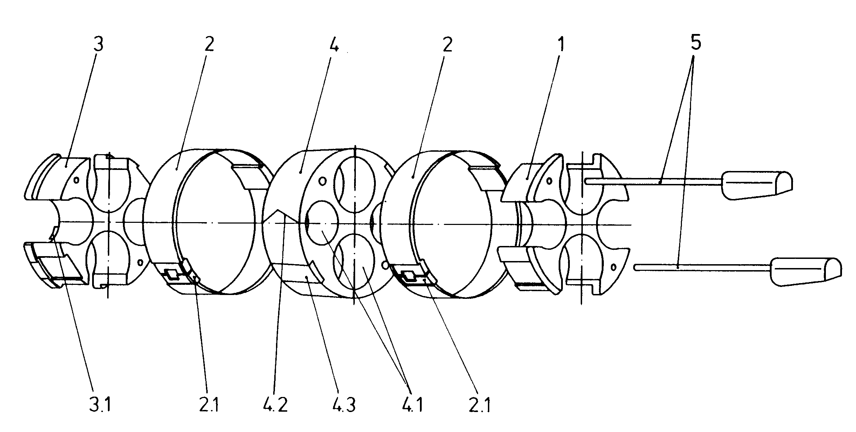

Ein Ausführungsbeispiel der Erfindung ist anhand der Abbildung näher erläutert.

Das in der Abbildung dargestellte Abdichtelement, wie die Stützscheibe 3, besteht im wesentlichen aus einer einteiligen Druckscheibe 1, die von einem Haltering 2 umgeben ist, sowie einer Dichtscheibe 4 und mindestens einer Sollbruchstelle 4.2. Die Halterung der einzelnen Kabelzüge, die auch verschiedene Durchmesser haben können, erfolgt mittels eines die Druckscheibe 1 sowie die Stützscheibe 3 umgebenden Halteringes 2, der wiederum aus nur einem Teil besteht, ggf. kann dieser Haltering 2, der in die Druckscheibe 1 sowie Stützscheibe 3 einrastet, auch zwei- oder mehrteilig sein. Dieser Haltering 2 hat außerdem die Aufgabe, eine plane Anlegefläche für das Gummidichtelement zu schaffen, die eine gleichmäßige Verformung derselben ermöglicht.

Gleiches gilt auch für die hinter der Druckscheibe 1 angeordnete Stützscheibe 3, die in ihrer geometrischen Gestaltung gleich oder ähnlich wie die Druckscheibe 1 sein kann und ebenfalls mit einem Haltering 2 umschlossen wird.

Vorteilhaft ist dabei auch die zwischen Druck- und Stützscheibe 1, 3 angeordnete Dichtscheibe 4, aus einem geeigneten Elastomer. Die Durchdringungen 4.1 der Dichtscheibe 4 sind auf die Durchmesser der Kabelzüge so abgestimmt, daß sich eine einfache und sichere Montage ergibt. Sollten keine Kabel vorhanden sein und die Kabelzüge des Mehrfachrohres im Schacht enden, kann das Dichtelement selbst auf die Kabelzüge aufgeschoben werden. Falls jedoch Kabel vorhanden sind, ist die mit Sollbruchstellen versehene Dichtscheibe 4 an diesen Stellen bauseitig zu trennen, damit das Dichtelement über die vorhandenen Kabel gelegt werden kann. Dabei sind zweckmäßigerweise nur jene Sollbruchstellen zu trennen, die zum Aufbringen, je nach Anzahl, der Kabel erforderlich sind.

Die axiale Verspannung des Dichtelementes erfolgt mittels Spanngliedern 5. Diese bestehen u.a. aus als Zuganker ausgebildte Bolzen.

Die Verspannung wird vorzugsweise mit Hilfe von sogen. Spannocken erreicht; sie kann aber auch durch andere Spannelemente wie z.B. Gewindebolzen mit Muttern oder durch Keilwirkung erreicht werden.

Da zum Verspannen des Dichtelementes hohe Kräfte erforderlich sind, sind zweckmäßiserweise mehrere Spannglieder, d.h. mindestens zwei vorgesehen. Falls nur ein Spannglied, z.B. aus Platzmangel vorgesehen werden kann, ist aufgrund der auftretenden Kräfte u.U. mit unzulässigen Verformungen von Druck- oder Stützscheibe 1, 3, zu rechnen.

Sind Halbrohre vorgesehen, so sind auch hier die durch Sollbruchstellen gekennzeichneten Aussparungen 2.1 bzw. 4.3 sowohl bei den Halteringen 2, als auch der Dichtscheibe 4 zu entfernen. Im übrigen weisen Druck- und Stützscheibe 1, 3 ähnliche Konfigurationen auf, die der Innenoberfläche eines Halbrohres entsprechen.

## Patentansprüche

1. Dichtelement, mit dem mit Kabeln belegte Kabelzüge zum umgebenden Kabelkanalrohr wasser- und gasdicht fixierbar sind mit:
A) einer Druckscheibe (1),
B) einer Stützscheibe (3),
C) wenigstens einer aus Elastomer bestehenden Dichtscheibe (4), die Durchdringungen (4.1) aufweist, die auf die Durchmesser der Kabelzüge abgestimmt sind,
**dadurch gekennzeichent, daß**
D) die Druckscheibe (1) und die Stützscheibe (3) einteilig ausgebildet sind,
E) die Druckscheibe (1) und die Stützscheibe (3) mit axial verlaufenden und radial zum Umfang der Druck- bzw. Stützscheibe offenen Nuten versehen sind,
F) daß Halteringe (2) vorgesehen sind,
f1) die jeweils die Druckscheibe und die Stützscheibe umschließen,
f2) einteilig ausgebildet sind,
f3) in der Druckscheibe (1) bzw. Stützscheibe (3) fest einrasten,
f4) Sollbruchstellen aufweisen und
G) daß die Dichtscheibe (4) Sollbruchstellen (4.2) aufweist.

2. Dichtelement, nach Anspruch 1 **dadurch gekennzeich****net**, daß dessen Einzelteile aus Kunststoff bestehen.

3. Dichtelement, nach Anspruch 1 oder 2, **dadurch** **gekennzeichnet**, daß der Werkstoff zur Erhöhung seiner mechanischen Eigenschaften armiert, mit Glas- und/oder Kohlefasern gefüllt, ist.

4. Dichtelement, nach einem der Ansprüche 1 - 3, **da****durch gekennzeichnet,** daß der Haltering (2) mehrteilig ausgebildet ist.

5. Dichtelement nach einem der Ansprüche 1 - 4, **dadurch gekennzeichnet**, daß dessen Dichtscheibe (4) aus einem Elastomer besteht.

6. Dichtelement nach einem der Ansprüche 1 - 5, **dadurch gekennzeichnet**, daß die Stützscheibe (3) mit Messerklingen (3.1) versehen ist.

## Claims

1. Sealing element for securing stretches of cables equipped with cables in a water and gastight condition relative to the surrounding cable duct pipe, with:
A) a thrust disk (1),
B) a supporting disk (3),
C) at least one elastomeric sealing disk (4), having holes (4.1) which are adapted to the diameter of the stretches of cables,
**characterized in that**
D) said thrust disk (1) and said supporting disk (3) are undivided,
E) said thrust disk (1) and said supporting disk (3) are provided with axially extending grooves, said grooves being radially open to the circumference of said thrust or supporting disk,
F) holding rings (2) are provided which
f1) surround said thrust disk and said supporting disk,
f2) are undivided,
f3) firmly engage into said thrust disk (1) and/or said supporting disk (3),
f4) are provided with pierceable points, and
G) said sealing disk (4) has pierceable points (4.2).

2. Sealing element according to claim 1, **characterized in that** the individual components of said sealing element are of plastic material.

3. Sealing element according to claims 1 or 2, **characterized in that** the material has been reinforced to increase its mechanical strength and has been filled with glass and/or carbon fibres.

4. Sealing element according to any of claims 1 to 3, **characterized in that** said holding ring (2) consists of several parts.

5. Sealing element according to any of claims 1 to 4, **characterized in that** its sealing disk (4) consists of an elastomer.

6. Sealing element according to any of claims 1 to 5, **characterized in that** said supporting disk (3) is provided with knifeblades (3.1).

## Revendications

1. Elément d'étanchéification permettant de fixer des grips équipés de câbles vers les conduites de caniveaux à câbles, de façon étanche à l'eau et au gaz, comprenant:
A) un disque de pression (1),
B) un disque support (3)
C) au moins un disque d'étanchéité en élastomère (4), qui présente des percements (4.1) adaptés aux diamètres des grips,
**caractérisé en ce que**
D) le disque de pression (1) et le disque support (3) sont formés d'une pièce,
E) le disque de pression (1) et le disque support (3) sont pourvus de gorges orientées dans le sens axial et ouvertes dans le sens radial par rapport à la circonférence du disque de pression, resp. du disque support,
F) sont prévus des bagues de fixation (2),
f1) qui enserrent respectivement le disque de pression et le disque support,
f2) sont formés d'une pièce,
f3) s'enclenchent fermement dans le disque de pression (1) resp. le disque support (3),
f4) présentent des points de rupture et
G) le disque d'étanchéité (4) présente des points de rupture (4.2).

2. Elément d'étanchéification selon la revendication 1, **caractérisé en ce que** ses pièces constitutives sont en matière plastique.

3. Elément d'étanchéification selon la revendication 1 ou 2, **caractérisé en ce que** le matériau est armé et garni de fibre de verre et/ou de carbone.

4. Elément d'étanchéification selon l'une des revendications 1 à 3, **caractérisé en ce que** la bague de fixation (2) est en plusieurs pièces.

5. Elément d'étanchéification selon l'une des revendications 1 à 4, **caractérisé en ce que** son disque d'étanchéité (4) est fait en un élastomère.

6. Elément d'étanchéification selon l'une des revendications 1 à 5, **caractérisé en ce que** le disque support (3) est équipé de lames de couteau (3.1).
